Europäisches Patentamt

European Patent Office

Office européen des brevets

(19)

(11) Veröffentlichungsnummer: **0 284 809 B1**

# EUROPÄISCHE PATENTSCHRIFT

(12)

(45) Veröffentlichungstag der Patentschrift: **20.05.92**

(21) Anmeldenummer: **88103247.8**

(22) Anmeldetag: **03.03.88**

(51) Int. Cl.⁵: $H04B\ 5/00$

(54) Verfahren zur Übertragung von Funksignalen und Funkübertragungssystem zur Ausführung des Verfahrens.

(30) Priorität: **30.03.87 DE 3710455**

(43) Veröffentlichungstag der Anmeldung:
**05.10.88 Patentblatt 88/40**

(45) Bekanntmachung des Hinweises auf die
Patenterteilung:
**20.05.92 Patentblatt 92/21**

(84) Benannte Vertragsstaaten:
**AT CH DE FR GB IT LI SE**

(56) Entgegenhaltungen:
**EP-A- 0 004 003**
**CH-A- 651 432**
**DE-A- 2 645 057**
**DE-A- 2 754 455**

(73) Patentinhaber: **Licentia Patent-**
**Verwaltungs-GmbH**
**Theodor-Stern-Kai 1**
**W-6000 Frankfurt/Main 70(DE)**

(72) Erfinder: **Roll, Hans Peter, Dipl.-Ing.**
**Ringstrasse 10**
**W-7901 Illerkirchberg(DE)**

(74) Vertreter: **Amersbach, Werner, Dipl.-Ing. et al**
**Licentia Patent-Verwaltungs-GmbH Theodor-**
**Stern-Kai 1**
**W-6000 Frankfurt 70(DE)**

## Beschreibung

Die Erfindung betrifft ein Verfahren zur sicheren Übertragung von Funksignalen gemäß dem Oberbegriff des Anspruchs 1 sowie ein Funkübertragungssystem zum Ausführen des Verfahrens.

Zwar wird die Erfindung im folgenden im Zusammenhang mit einem Rettungsfunksystem für Tunnel näher beschrieben, doch ist sie nicht auf diesen Anwendungsfall beschränkt. Vielmehr kann die Erfindung ganz allgemein zur Herstellung von Funkverbindungen zwischen Teilnehmern verwendet werden, die nicht direkt in Funkkontakt treten können. Bevorzugte Einsatzgebiete der Erfindung sind insbesondere unterirdische Anlagen und Systeme wie man sie z. B. im Bereich des Bergbaus, des unterirdischen Lagerwesens (unteriridische Vorratslager, Endlagerung von Sondermüll etc.), des Verkehrs (Tunnel, mehrstöckige unterirdische Tiefgaragen etc.), der städtischen Versorgung (Kanalisation etc.) oder im militärischen Bereich (unterirdische Kommandostände, Luftschutzanlagen etc.) findet; aber auch natürlich entstandene Höhlen zählen zu den bevorzugten Einsatzgebieten der Erfindung. Insbesondere eignet sich die Erfindung für den Einsatz als Rettungs- und/oder Notfunksystem in den oben aufgeführten Anwendungsbereichen.

In längeren Tunnels z. B. ist es im Katastrophenfall unerläßlich, daß die Rettungsdienste, die in den Tunnel eindringen müssen, zu ihrer mobilen Einsatzzentrale am Tunnelmund und auch untereinander Funkkontakt haben.

In Tunnels wird üblicherweise ein strahlendes Kabel als Antenne verwendet. Um die Längsdämpfung des strahlenden Kabels auszugleichen, sind in bestimmten Abständen Verstärker erforderlich. Bei einem Unfall kann das Kabel unterbrochen werden. Natürlich muß auch in diesem Fall der Funkkontakt zu der mobilen Einsatzzentrale außen am Tunnelmund sichergestellt sein.

Die bisher bekannten Verfahren für eine Funkübertragung in einem Tunnel arbeiten entweder im Duplexbetrieb mit Hilfe einer koordinierenden Zentrale mit unterschiedlichen Frequenzen für beide Funkrichtungen, oder bei Simplexfrequenzen mit Verstärkern für nur eine Richtung. Beide Verfahren können die hier gestellten Anforderungen daher nicht erfüllen.

Aus der DE-A-30 04 483 bzw. der DE-C-26 45 057 sind zwei Verfahren bekannt, bei denen Simplexfrequenzen in beide Richtungen verstärkt werden. Beide Verfahren setzen jedoch einegute Reflexionsdämpfung der Kabelabschnitte voraus, was bei einer Kabelunterbrechung nicht sichergestellt ist.

Der vorliegenden Erfindung liegt daher die Aufgabe zugrunde, ein einfaches Verfahren zur schaffen zur sicheren Übertragung von Funksignalen von Funkteilnehmern, die nicht direkt in Funkkontakt treten können, welches Verfahren die Übertragung der Funksignale in beide Funkrichtungen ermöglicht, welches außerdem die Übertragung der Funksignale auch für den Fall sicherstellt, daß das strahlende Kabel unterbrochen ist und welches schließlich zur Übertragung der Funksignale in beide Richtungen keine koordinierende Zentrale im Funkübertragunssystem erfordert. Des weiteren besteht die Aufgabe darin, ein einfaches und sicheres Funkübertragungssystem zum Ausführen des Verfahrens zur schaffen.

Diese Aufgabe wird durch die im Anspruch 1 gekennzeichneten Merkmale gelöst. Vorteilhafte Ausgestaltungen des Verfahrens werden in den Unteransprüchen 2 bis 6 gekennzeichnet. Im Anspruch 7 wird eine vorteilhafte Ausführung des Funkübertragungssystems zur Ausführung des erfindungsgemäßen Verfahrens, in den Unteransprüchen 8 bis 27 vorteilhafte Ausgestaltungen und bevorzugte Verwendungen des erfindungsgemäßen Funkübertragungssystem gekennzeichnet.

Zur Ausführung des erfindungsgemäßen Verfahrens ist ein Funkübertragungssystem erforderlich, das in einzelne Teilabschnitte unterteilt ist, die gemäß einer vorgegebenen oder vorgebbaren topologischen Struktur miteinander verbunden sind und die eine abschnittsweise Übertragung der Funksignale in Vorwärtsrichtung oder Rückwärtsrichtung zulassen, wobei ein einzelner Teilabschnitt für sich Funksignale senden und empfangen kann. Mindestens einer der Teilabschnitte enthält ein als Sende- und Empfangsantenne dienendes Kabel, das an mindestens einem seiner Enden über jeweils eine Verbindungsschaltung mit einem anderen Teilabschnitt verbunden ist, wobei jede dieser Verbindungsschaltungen zwei in Gegenrichtung geschaltete Verstärker enthält, die zum Ausgleich der Längsdämpfung in den direkt angeschlossenen Teilabschnitten die Funksignale entsprechend verstärken, wobei der eine Verstärker Funksignale in Vorwärtsrichtung verstärkt und der andere Verstärker Funksignale in Rückwärtsrichtung verstärkt.

Bei dem erfindungsgemäßen Verfahren sind die einzelnen Teilabschnitte des Funkübertragungssystems im Ruhezustand und/oder in Sendepausen zwar empfangsbereit, aber elektrisch voneinander entkoppelt, so daß eine abschnittsweise Übertragung von Funksignalen nicht möglich ist.

Empfängt einer der elektrisch voneinander entkoppelten Teilabschnitte ein Funksignal der Dauer T, wird von diesem ersten Teilabschnitt ausgehend ein Richtkopplungsprozeß in Gang gesetzt, der mit der Ausbreitung einer Kugelwelle der Dauer T vergleichbar ist und bei den entlang sämtlicher, von dem ersten Teilabschnitt ausgehender Verbindungszüge, die durch die miteinander verbundenen Teilabschnitte gebildet werden und deren längstes Mitglied N Teilabschnitte umfaßt, nacheinander jeweils der vorhergehende n-te Teilabschnitt eines jeden Verbindungszuges mit dem nachfolgenden (n + 1)-ten Teilabschnitt für die Dauer T dergestalt elektrisch gekoppelt, daß eine Übertragung von Funksignalen jeweils nur von n-ten Teilabschnitt eines Verbindungszuges zum (n + 1)-ten Teilabschnitt des gleichen Verbindungszuges erfolgt und nicht in umgekehrter Richtung, wobei die Zahl n je nach Länge des jeweiligen Verbindungszuges von 1, 2, 3 bis maximal N-1 läuft.

Nach der Zeit T wird ausgehend von dem ersten Teilabschnitt, von dem der Richtkopplungsprozeß ausgegangen war, ein Entkopplungsprozeß in Gang gesetzt, der ebenfalls mit der Ausbreitung einer Kugelwelle vergleichbar ist und bei dem entlang sämtlicher von dem ersten Teilabschnitt ausgehender Verbindungszüge nacheinander der jeweils n-te Teilabschnitt eines jeden Verbindungszuges von dem (n + 1)-ten Teilabschnitt des gleichen Verbindungszuges elektrisch entkoppelt wird.

Bei dem erfindungsgemäßen Verfahren können alle Funkteilnehmer Funksignale auf der gleichen (Simplex-) Frequenz senden und/oder empfangen. Möglich ist aber auch, das die Funkteilnehmer auf unterschiedlichen Frequenzen (Semi-Duplex) senden und/oder empfangen. Im Falle, daß auch Funkverkehr im Semi-Duplex möglich sein soll, müssen die Empfänger so ausgebildet sein, daß sie beide Frequenzen erkennen können.

Weiterhin kann bei dem erfindungsgemäßen Verfahren bereits während eines Entkopplungsprozesses bei erneutem Empfang von Funksignalen auf einem der elektrisch entkoppelten Teilabschnitte von diesen Teilabschnitt ausgehend ein neuer Richtkopplungsprozeß in Gang gesetzt werden.

In einer vorteilhaften Ausführungsform des erfindungsgemäßen Verfahrens werden elektrisch miteinander gekoppelte Teilabschnitte nach Ablauf der Zeit T, die der Dauer des in übertragenden Funksignals entspricht, erst nach einer vorgebbaren weiteren Zeit T' elektrisch voneinander entkoppelt. Diese Zeit T' ist so bemessen, daß kurze Sendepausen des gerade sendenden Funkteilnehmers überbrückt werden können, ohne daß der Entkopplungsprozeß in Gang gesetzt wird. Dies hat den Vorteil, daß die Übertragung der Funksignale des gerade sendenden Funkteilnehmers z. B. in den unvermeidlichen Sprechpausen zwischen einzelnen Wörtern oder Sätzen nicht durch Funksignale anderer Funkteilnehmer abgebrochen wird.

In einer weiteren besonders vorteilhaften Ausführungsform des erfindungsgemäßen Verfahrens werden die Kopplung bzw. Entkopplung der einzelnen Teilabschnitte in den Verbindungsschaltungen vorgenommen, die jeweils zwischen zwei miteinander verbundenen Teilabschnitten geschaltet ist.

Im folgenden wird die Erfindung anhand der Figuren näher erläutert, in denen Ausführungsbeispiele und weitere Details des erfindungsgemäßen Funkübertragungssystems dargestellt sind. Im einzelnen zeigen

FIG. 1      eine vorteilhafte Ausgestaltung einer Verbindungsschaltung des erfindungsgemäßen Funkübertragungssystems

FIG. 2      eine weitere vorteilhafte Ausgestaltung einer Verbindungsschaltung des erfindungsgemäßen Funkübertragungssystems mit geregelten Verstärkern

FIG. 3 bis 8      verschiedene Ausführungsbeispiele des erfindungsgemäßen Funkübertragungssystems mit unterschiedlichen topologischen Strukturen

FIG. 9      ein Ausführungsbeispiel des erfindungsgemäßen Funkübertragungssystem in der Anwendung als Rettungsfunksystem in einem Tunnel.

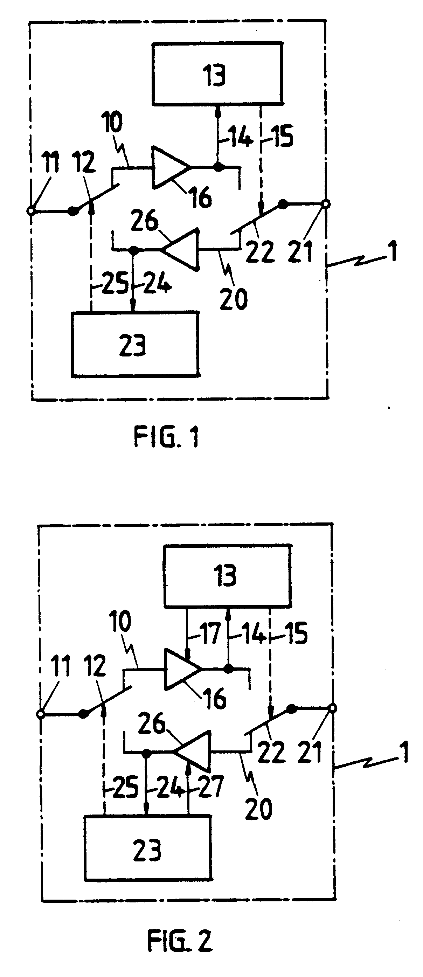

FIG. 1 zeigt eine vorteilhafte Ausgestaltung einer Verbindungsschaltung (1) des erfindungsgemäßen Funkübertragungssystems.

Die Verbindungsschaltung (1) enthält zwei in Gegenrichtung geschaltete Verstärker (16, 26), zwei Ein/Ausgänge (11, 21), zwei Schalter (12, 22) und zwei Empfänger (13, 23).

Der erste Ein/Ausgang (11) ist für den Anschluß der Verbindungsschaltung (1) an einen in der Figur nicht gezeigten ersten Teilabschnitt vorgesehen. Der zweite Ein/Ausgang (21) ist für den Anschluß der Verbindungsschaltung (1) an einen in der Figur nicht gezeigten zweiten Teilabschnitt vorgesehen.

Der erste Schalter (12) ist mit seinem einen Ende an den ersten Ein/Ausgang (11) angeschlossen und mit seinem anderen Ende entweder über einen ersten Leitungszweig (10) an den Eingang des ersten Verstärkers (16) oder über einen zweiten Leitungszweig (20) an den Ausgang des zweiten Verstärkers (26) anschließbar.

Der zweite Schalter (22) ist mit seinem einen Ende an den zweiten Ein/Ausgang (21) angeschlossen und mit seinem anderen Ende entweder über den zweiten Leitungszweig (20) an den Eingang des zweiten Verstärkers (26) oder über den ersten Leitungszweig (10) an den Ausgang des ersten Verstärkers (16) anschließbar.

Der erste Empfänger (13) ist eingangsseitig über einen Abzweig (14) des ersten Leitungszweigs (10) an den Ausgang des ersten Verstärkers (16) und ausgangsseitig an den Steuerkanal (15) für den zweiten Schalter (22) angeschlossen.

Der zweite Empfänger (23) ist eingangsseitig über einen Abzweig (24) des zweiten Leitungszweigs (20) an den Ausgang des zweiten Verstärkers (26) und ausgangsseitig an den Steuerkanal (25) für den ersten Schalter (12) angeschlossen.

Im Ruhezustand und/oder in Sendepausen ist der erste Ein/Ausgang (11) über den sich in Ruheposition befindlichen ersten Schalter (12) und den ersten Leitungszweig (10) mit dem Eingang des ersten Verstärker (16) verbunden und der zweite Ein/Ausgang (21) über den sich ebenfalls in Ruheposition befindlichen zweiten Schalter (22) und den zweiten Leitungszweig (20) mit dem Eingang des zweiten Verstärkers (26) verbunden, so daß die beiden angeschlossenen Teilabschnitte elektrisch voneinander entkoppelt sind.

Werden Funksignale der Dauer T von dem am ersten Ein/Ausgang (11) angeschlossenen und in der Figur nicht gezeigten Teilabschnitt "in Vorwärtsrichtung" in die Verbindungsschaltung eingespeist und durch den ersten Verstärker (16) verstärkt, empfängt der Empfänger (13) über den Abzweig (14) ein entsprechendes Signal und gibt ein Steuersignal in den Steuerkanal (15). Das Steuersignal bewirkt, daß der zweite Schalter (22) umgeschaltet wird, so daß nunmehr der erste Ein/Ausgang (11) über den ersten Leitungszweig (10) an den Eingang des ersten Verstärkers (16) und der zweite Ein/Ausgang (21) über den zweiten Schalter (22) und den ersten Leitungszweig (10) an den Ausgang des ersten Verstärkers angeschlossen sind. Damit ist der an dem ersten Ein/Ausgang angeschlossene Teilabschnitt für die Dauer T über den ersten Verstärker (16) mit dem an den zweiten Ein/Ausgang (21) angeschlossenen Teilabschnitt in Vorwärtsrichtung elektrisch gekoppelt, so daß die abschnittsweise Übertragung der Funksignale von dem ersten Teilabschnitt zu dem zweiten Teilabschnitt erfolgen kann. Die gleichzeitige Übertragung von Funksignalen in Rückwärtsrichtung ist hierbei für die Zeit T ausgeschlossen.

In vergleichbarer Weise verläuft die Übertragung von Funksignalen "in Rückwärtsrichtung".In diesem Fall werden Funksignale der Dauer T″ von den an dem zweiten Ein/Ausgang (21) angeschlossenen Teilabschnitt in die Verbindungsschaltung (1) eingespeist und durch den zweiten Verstärker (26) verstärkt. Der Empfänger (23) empfängt über den Abzweig (24) entsprechende Signale und gibt ein entsprechendes Steuersignal auf den Steuerkanal (25). Das Steuersignal bewirkt, daß nunmehr der zweite Ein/Ausgang (21) über den zweiten Leitungszweig (20) an den Eingang des zweiten Verstärkers (26) und der erste Ein/Ausgang (11) über den ersten Schalter (12) und den zweiten Leitungszweig (20) an den Ausgang des zweiten Verstärkers (26) angeschlossen sind. Damit ist der an den zweiten Ein/Ausgang angeschlossene zweite Teilabschnitt für die Dauer T″ über den zweiten Verstärker (26) mit dem an den ersten Ein/Ausgang (21) angeschlossenen ersten Teilabschnitt in Rückwärtsrichtung elektrisch gekoppelt, so daß die abschnittsweise Übertragung der Funksignale von den zweiten Teilabschnitt zu dem ersten Teilabschnitt erfolgen kann. Ein gleichzeitige Übertragung von Funksignalen in Vorwärtsrichtung ist hierbei für die Zeit T″ ausgeschlossen.

Der Entkopplungsprozeß verläuft dem zeitlich vorangegangenen Kopplungsprozeß entgegengesetzt. Während beim Kopplungsprozeß der dem jeweils aktiven Verstärker (16 oder 26) ausgangsseitig nachgeschaltete Schalter (22 oder 12) mittels des zugehörigen Empfängers (13 oder 23) von der Ruheposition in die andere mögliche Position umgeschaltet wird, wird beim Entkopplungsprozeß dieser Schalter von dieser anderen möglichen Position in die Ruheposition umgeschaltet.

Der Vorteil dieser erfindungsgemäßen Lösung besteht insbesondere darin, daß die Verbindungsschaltung verhindert, daß unerwünschte Reflexionen der Funksignale, die z. B. durch Bruch eines strahlenden Kabels in einem der Teilabschnitte an der Bruckstelle hevorgerufen werden können, von dem betreffenden Teilabschnitt in die direkt mit diesen Abschnitt verbundenen Teilabschnitte übertragen werden, so daß das Funkübertragungssystem bis auf den gestörten Teilabschnitt funktionstüchtig bleibt.

Um die in einer besonders vorteilhaften Ausführungsform des erfindungsgemäßen Verfahrens vorgesehene um die Zeit T′ verzögerte Entkopplung der Teilabschnitte zu realisieren, kann der dem jeweils aktiven Verstärker (16 oder 26) ausgangsseitig nachgeschaltete Schalter (22 oder 12) um diese Zeit T′ verzögert in die Ruheposition umgeschaltet werden.

Ist die Längsdämpfung in den einzelnen Teilabschnitten bekannt und relativ konstant, wie dies z. B. bei strahlenden Kabeln der Fall ist, ist eine Regelung der Verstärker (16, 26) in den direkt angeschlossenen Verbindungsschaltungen (1) nicht erforderlich. Ist die Längsdämpfung eines Teilabschnitts jedoch zeitlich schwankend und/oder unbekannt, wie dies z. B. bei mobilen Funkteilnehmern der Fall ist, die ihre Funksignale über Außenantennen in das Funkübertragungssystem einspeisen, kann zur Beschränkung des erforderlichen Dynamikbereichs die projektierte maximale Verstärkung der Verstärker (16 oder 26) in der direkt an die jeweilige Außenantenne angeschlossenen Verbindungsschaltung (1) mittels der ohnehin vorgesehenen Empfänger (13 oder 23) über eine Regelung (17 oder 27) vgl. FIG. 2 heruntergeregelt werden; und zwar immer dann, wenn der betreffende Empfänger (13 oder 23) einen hohen Signalpegel erkennt.

Weiterhin kann in einer vorteilhaften Ausgestaltung der Verbindungsschaltung (1) den Verstärkern (16, 26) ausgangsseitig jeweils ein Richtkoppler nachgeschaltet werden, an dessen Nebenausgang der Eingang des zugehörigen Empfängers (13 oder 23) angeschlossen ist und an dessen Hauptausgang der ausgangsseitige Teil des zugehörigen Leistungszweiges (10 oder 20) angeschlossen ist. Der Vorteil dieser Lösung besteht darin, daß die Übertragung von unerwünschten Reflexionen von einem Teilabschnitt in den anderen noch effektiver verhindert werden.

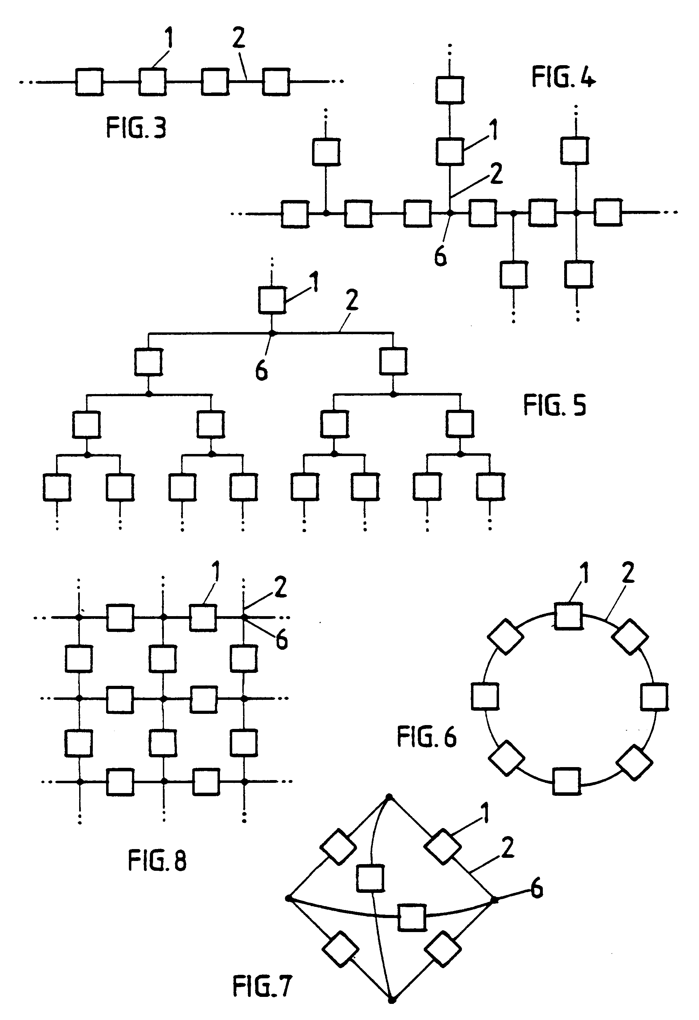

Die Figuren 3 bis 8 zeigen verschiedene Ausführungsbeispiele des erfindungsgemäßen Funkübertragungssystem, die sich in ihrer topologischen Struktur unterscheiden.

FIG. 3 zeigt ein unverzweigtes offenes Funkübertragungssystem, bei dem mindestens zwei unverzweigte Teilabschnitte (2) über jeweils eine Verbindungsschaltung (1) untereinander verbunden sind. Den Anfang und das Ende eines solchen Systems bilden Teilabschnitte, die nur mit einem ihrer Enden über jeweils eine Verbindungsschaltung (1) mit den Funkübertragungssystem verbunden sind. Ein solches System eignet sich z. B. für den Einsatz in Tunneln.

FIG. 4 zeigt ein verzweigtes Funkübertragungssystem mit verzweigten und unverzweigten Teilabschnitten (2), das eine busähnliche topologische Struktur aufweist. Ein solches System eignet sich z. B. für den Einsatz im Bergbau, in der Kanalisation usw.

FIG. 5 zeigt ebenfalls ein verzweigtes Funkübertragungssystem mit verzweigten Teilabschnitte (2), das eine baumähnliche topologische Struktur aufweist. Ein solches System eignet sich z. B. für den Einsatz in unterirdischen Kommandozentralen usw.

FIG. 6 und 7 zeigen in sich geschlossene maschenförmige Funkübertragungssysteme mit unverzweigten Teilabschnitten (2) (FIG. 6) und mit verzweigten Teilabschnitten (2) (FIG. 7).

FIG. 8 zeigt ein Funkübertragungssystem, bei dem mehrere verzweigte und maschenförmig miteinander verbundene Teilabschnitte (2) zu einem flächigen Gitter verbunden worden sind.

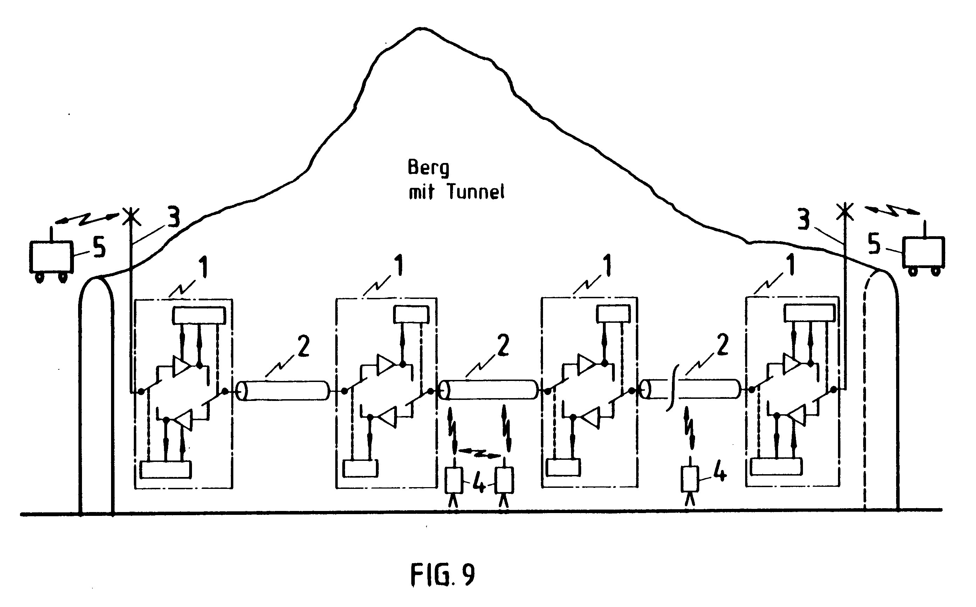

In FIG. 9 schließlich ist ein Ausführungsbeispiel des erfindungsgemäßen Funkübertragungssystems in der Anwendung als Rettungsfunksystem in einem Tunnel gezeigt.

In diesem Beispiel sind mehrere unverzweigte strahlende Kabel (2) über erfindungsgemäße Verbindungsschaltungen (1) mit ungeregelten Verstärkernn zu einen unverzweigten offenen Funkübertragungssystem gemäß FIG. 5 verbunden. An den Tunnelenden ist jeweils eine Außenantenne (3) über eine Verbindungsschaltung mit geregelten Verstärkern an das Funkübertragungssystem angeschlossen. Im Tunnel befinden sich mehrere Rettungsdienste (4) die untereinander und/oder mit den mobilen Einsatzzentralen (5) außerhalb des Tunnels in Funkverbindung stehen.

Im Ruhestand sind alle Verstärker in den Verbindungsschaltungen (1) mit ihrem Eingang über einen Schalter an eines der strahlenden Kabel (2) bzw. an die Tunnelaußenantenne (3) angeschlossen und sind damit empfangsbereit. An jeden Verstärker ist ein Empfänger angeschlossen, der den Funkkanal des Rettungsdienstes überwacht. Beginnt nun die Einsatzzentrale (5) außen am Tunnel oder einer der Rettungsdienste (4) im Tunnel zu senden, so erkennen das die entsprechenden Empfänger und schalten, je nachdem, welcher Teilnehmer zuerst sendet, die Schalter von dem Eingang des Verstärkers an dem kein Signal anliegt um auf den Ausgang des Verstärkers, an dessen Eingang das Signal ansteht.

Auf diese Weise wird die gesamte Verstärkerkette sehr schnell in der richtigen Richtung durchgeschaltet. Wenn der zuerst sendende Teilnehmer aufhört zu senden, fallen alle Schalter nacheinander in die Ruheposition und das Spiel kann erneut beginnen.

Mit diesem System ist ein Funkverkehr im Wechselsprechen auf einer Frequenz (Simplex) und/oder auf zwei Frequenzen (Semi-Duplex) möglich. Im Falle, daß auch Funkverkehr in Semi-Duplex möglich sein soll, müssen die Empfänger so ausgebildet sein, daß sie beide Frequenzen erkennen können.

Wenn bei diesem System das Kabel an einer beliebigen Stelle unterbrochen wird, so ist von beiden Seiten der Unterbrechung zu dem jeweiligen Tunnelausgang weiterhin uneingeschränkt Funkverkehr möglich.

Die Verstärker zwischen den Kabelabschnitten sind erforderlich, um die Kabellängsdämpfung, welche bekannt und relativ konstant ist, auszugleichen. Sie brauchen nicht geregelt werden.

Die Verstärker in den Verbindungsschaltungen an den Tunnelenden müssen die Dämpfung zwischen der mobilen Einsatzzentrale und der Tunnelaußenantenne ausgleichen. Diese Dämpfung ist relativ gering, aber nicht genau bekannt. Um den erforderlicher Dynamikbereich einzuschränken, kann bei diesen Verstärkern in einer vorteilhaften Ausgestaltung die projektierte maximale Verstärkung durch den ohnehin vorhandenen Empfänger (nämlich dann, wenn der Empfänger einer sehr hohen Signalpegel erkennt) über eine Regelung heruntergeregelt werden.

Generell können erfindungsgemäße Funkübertragungssysteme, die in unterirdischen Anwendungen eingesetzt werden und mit Außenantenne (3) ausgestattet, vorteilhaft auch in oberirdische Funkübertragungssysteme eingebunden werden bzw. diese ergänzen. Hieraus ergibt sich eine Vielzahl von möglichen Anwendungen:

Außer dem bereits geschilderten Fall, daß oberirdische Funkteilnehmer mit unterirdischen Funkteilnehmern in Funkverbindung treten können, ist es z. B. auch denkbar, daß unterirdische Funkteilnehmer in unabhängigen unterirdischen Anlagen oder Systemen, die mit solchen Funkübertragungssystemen ausgestattet sind, über oberirdische Funkübertragungsstrecken miteinander in Funkverbindung treten können bzw. umgekehrt, daß oberirdische Funkteilnehmer über unterirdische Anlagen und Systeme, die mit solchen Funkübertragungssystemen ausgestattet sind, miteinander in Funkverbindung treten können.

Die Erfindung kann fachmännisch in vielerlei Weise abgeändert, ergänzt oder an spezielle Einsatzbedingungen angepaßt werden, ohne daß dies hier näher erläutert werden müßte.

So sind z. B. erfindungsgemäße Funkübertragungssysteme mit dreidimensionalen raumgitterähnlichen topologischen Strukturen denkbar, die - ähnlich wie die Funkübertragungssysteme mit einer flächigen gitterförmigen topologischen Struktur - aus mehreren verzweigten und maschenförmig miteinander verbundenen Teilabschnitten gebildet werden. Funkübertragungssysteme mit vermaschten topologischen Strukturen haben generell gegenüber einfachen unverzweigten oder verzweigten Systemen den Vorteil, daß selbst bei Ausfall mehrerer Teilabschnitte z. B. durch Kabelbruch dennoch das System i. a. insgesamt voll funktionsfähig bleibt, weil immer mehrere Verbindungszüge existieren, die einen Punkt im System mit einem anderen Punkt im System verbinden.

Weiterhin ist es möglich, daß die oberirdische Funkübertragung in dem Ausführungsbeispiel in FIG. 9 mit Hilfe mehrerer an der Erdoberfläche angebrachter Antennen so gestaltet wird, daß nur noch eine mobile Einsatzzentrale an einem der beiden Tunnelenden zur Leitung der Rettungsdienste erforderlich ist.

Schließlich ist bei dem Ausführungsbeispiel in FIG. 9 möglich, daß auf den strahlenden Kabeln (2) des erfindungsgemäßen Funkübertragungssystems parallel andere Funkdienste wie Zug- oder Autotelefon betrieben werden können.

**Patentansprüche**

1. Verfahren zur sicheren Übertragung von Funksignalen von Funkteilnehmern (4, 5), die nicht direkt in Funkkontakt treten können, in beiden Funkrichtungen mittels eines Funkübertragungssystems,
   - welches Funkübertragungssytem aus mindestens zwei Teilabschnitten (2; 3) besteht, die eine abschnittsweise Übertragung der Funksignale in Vorwärtsrichtung oder in Rückwärtsrichtung zulassen,
   - wobei mindestens einer der Teilabschnitte ein strahlendes Kabel (2) enthält, das als Sende- und Empfangsantenne dient,
   - wobei jedes dieser Kabel an mindestens einem seiner Enden über jeweils eine Verbindungsschaltung (1) mit einem anderen Teilabschnitt verbunden ist,
   - wobei jede dieser Verbindungsschaltungen zwei in Gegenrichtung geschaltete Verstärker (16, 26) enthält, die zum Ausgleich der Längsdämpfung in den direkt angeschlossenen Teilabschnitten die Funksignale entsprechend verstärken,
   - wobei der erste Verstärker (16) Funksignale in Vorwärtsrichtung verstärkt und der zweite Verstärker (26) Funksignale in Rückwärtsrichtung verstärkt,
   dadurch gekennzeichnet,
   - daß die einzelnen Teilabschnitte (2; 3) des Funkübertragungssystems im Ruhezustand und/oder in Sendepausen zwar empfangsbereit, aber elektrisch voneinander entkoppelt sind,
   - daß nach Empfang eines Funksignals der Dauer T auf einem der elektrisch voneinander entkoppelten Teilabschnitte (2; 3) ein von diesem ersten Teilabschnitt ausgehender Richtkopplungsprozeß abläuft, bei dem entlang sämtlicher, von dem ersten Teilabschnitt ausgehender Verbindungszüge, die durch die miteinander verbundenen Teilabschnitte gebildet werden und deren längstes Mitglied N Teilabschnitte umfaßt, nacheinander jeweils der n-te Teilabschnitt eines jeden Verbindungszuges mit dem (n + 1)-ten Teilabschnitt des jeweils gleichen Verbindungszuges für Dauer T dergestalt elektrisch gekoppelt wird, daß eine Übertragung von Funksignalen jeweils nur vom n-ten Teilabschnitt eines Verbindungszuges zum (n + 1)-ten Teilabschnitt des gleichen Verbindungszuges erfolgt und nicht umgekehrt, wobei die Zahl n von 1, 2, 3 bis maximal N-1 läuft,

- daß nach der Zeit T ein von dem ersten Teilabschnitt ausgehender Entkopplungsprozeß abläuft, bei dem entlang sämtlicher von diesem ersten Teilabschnitt ausgehender Verbindungszüge nacheinander der jeweils n-te Teilabschnitt eines jeden Verbindungszuges von den (n + 1)-ten Teilabschnitt des gleichen Verbindungszuges elektrisch entkoppelt wird.

2. Verfahren nach Anspruch 1, dadurch gekennzeichnet, daß die Funkteilnehmer (4, 5) auf der gleichen Frequenz senden und/oder empfangen.

3. Verfahren nach Anspruch 1, dadurch gekennzeichnet, daß die Funkteilnehmer (4, 5) auf unterschiedlichen Frequenzen senden und/oder empfangen.

4. Verfahren nach einem der Ansprüche 1 bis 3, dadurch gekennzeichnet, daß bereits während eines Entkopplungsprozesses bei erneutem Empfang von Funksignalen auf einem der elektrisch bereits entkoppelter Teilabschnitte (2; 3) von diesem Teilabschnitt ausgehend ein neuer Richtkopplungsprozeß abläuft.

5. Verfahren nach einem der Ansprüche 1 bis 4, dadurch gekennzeichnet, daß die Kopplung bzw. Entkopplung der einzelnen Teilabschnitte (2; 3) in den zugehörigen Verbindungsschaltungen durchgeführt wird.

6. Verfahren nach einem Ansprüche 1 bis 5, dadurch gekennzeichnet, daß elektrisch gekoppelte Teilabschnitte (2; 3) nach Ablauf der Zeit T erst nach einer vorgegebenen weiteren Zeit T′ elektrisch voneinander entkoppelt werden, die so bemessen ist, daß kurze Sendepausen des sendenden Funkteilnehmers überbrückt werden können, ohne daß der Entkopplungsprozeß in Gang gesetzt wird.

7. Funkübertragungssystem zum Ausführen des Verfahrens nach einem der Ansprüche 1 bis 6,
   - welches Funkübertragunssystem aus mindestens zwei Teilabschnitten (2; 3) besteht, die eine abschnittsweise Übertragung der Funksignale in Vorwärtsrichtung oder in Rückwärtsrichtung zulassen,
   - wobei mindestens einer der Teilabschnitte ein strahlenden Kabel (2) enthält, das als Sende- und Empfangsantenne dient,
   - wobei jedes dieser Kabel an mindestens einem seiner Enden über jeweils eine Verbindungsschaltung (1) mit einem anderen Teilabschnitt verbunden ist,

- wobei jede dieser Verbindungsschaltungen zwei in Gegenrichtung geschaltete Verstärker (16, 26) enthält, die zum Ausgleich der Längsdämpfung in den direkt angeschlossenen Teilabschnitten die Funksignale entsprechend verstärken,
- wobei der erste Verstärker (16) Funksignale in Vorwärtsrichtung verstärkt und der zweite Verstärker (26) Funksignale in Rückwärtsrichtung verstärkt, dadurch gekennzeichnet, daß jede der Verbindungsschaltungen (1) zwei Ein/Ausgänge (11, 21), zwei Schalter (12, 22) und zwei Empfänger (13, 23) enthält, wobei
- der erste Ein/Ausgang (11) für den Anschluß der Verbindungsschaltung (1) an einen ersten Teilabschnitt (2; 3) vorgesehen ist und der zweite Ein/Ausgang (21) für den Anschluß der Verbindungsschaltung (1) an einen zweiten Teilabschnitt (2; 3) vorgesehen ist,
- der erste Schalter (12) mit seinem einen Ende an den ersten Ein/Ausgang (11) angeschlossen ist und mit seinem anderen Ende entweder über einen ersten Leitungszweig (10) an den Eingang des ersten Verstärkers (16) oder über einen zweiten Leitungszweig (20) an den Ausgang des zweiten Verstärkers (26) anschließbar ist und der zweite Schalter (22) mit seinem einen Ende an den zweiten Ein/Ausgang (21) angeschlossen ist und mit seinem anderen Ende entweder über den zweiten Leitungszweig (20) an den Eingang des zweiten Verstärkers (26) oder über den ersten Leitungszweig (10) an den Ausgang des ersten Verstärkers (16) anschließbar ist,
- der erste Empfänger (13) eingangsseitig über einen Abzweig (14) des ersten Leitungszweigs (10) an den Ausgang des ersten Verstärkers (16) und ausgangsseitig an den Steuerkanal (15) für den zweiten Schalter (22) angeschlossen ist und der zweite Empfänger (23) eingangsseitig über einen Abzweig (24) des zweiten Leitungszweigs (20) an den Ausgang des zweiten Verstärkers (26) und ausgangsseitig an den Steuerkanal (25) für den ersten Schalter (12) angeschlossen ist, und daß in jeder dieser Verbindungsschaltungen (1)
- in Ruhezustand und/oder in Sendepausen der erste Ein/Ausgang (11) über den sich in Ruheposition befindlichen ersten Schalter (12) und den ersten Leitungszweig (10) mit dem Eingang des ersten Verstärkers (16) verbunden ist und der zweite Ein/Ausgang (21) über den sich im Rüheposition befindlichen zweiten Schalter (22) und den zweiten Leitungszweig (20) mit dem Eingang des zweiten Verstärkers (26) verbunden ist,

- bei der Übertragung von Funksignalen in Vorwärtsrichtung der erste Ein/Ausgang (11) über den ersten Schalter (12) und den ersten Leitungszweig (10) mit dem Eingang des ersten Verstärkers (16) verbunden ist und der zweite Ein/Ausgang (21) über den zweiten Schalter (22) und den ersten Leitungszweig (10) mit dem Ausgang des ersten Verstärkers (16) verbunden ist,

- bei der Übertragung von Funksignalen in Rückwärtsrichtung der zweite Ein/Ausgang (21) über den zweiten Schalter (22) und den zweiten Leitungszweig (20) mit dem Eingang des zweiten Verstärkers (26) verbunden ist und der ersten Ein/Ausgang (11) über den ersten Schalter (12) und den zweiten Leitungszweig (20) mit dem Ausgang des zweiten Verstärkers (26) verbunden ist

- während eines Kopplungs- bzw. Entkopplungsprozesses der dem jeweils aktiven Verstärker (16 oder 26) ausgangsseitig nachgeschaltete Schalter (22 oder 12) mittels des zugehörigen empfangsbereiten Empfängers (13 oder 23) von der Ruheposition in die andere mögliche Position bzw. umgekehrt von der anderen möglichen Position in die Ruheposition umgeschaltet wird.

8. Funkübertragungssystem nach Anspruch 7, dadurch gekennzeichnet, daß bei einem Entkopplungsprozeß der dem zuvor aktiven Verstärker (16 oder 26) ausgangsseitig nachgeschaltete Schalter (22 oder 12) um eine Zeit T′ verzögert in die Ruheposition umgeschaltet wird, die so bemessen ist, daß kurze Sendepausen bei der Übertragung von Funksignalen eines Funkteilnehmers überbrückt werden.

9. Funkübertragungssystem nach einem der Ansprüche 7 bis 8, dadurch gekennzeichnet, daß die Verstärker (16, 26) über eine Regelung (17, 27) in ihrer Verstärkung geregelt sind.

10. Funkübertragungssystem nach einem der Ansprüche 7 bis 9, dadurch gekennzeichnet, daß den Verstärkern (16, 26) ausgangsseitig jeweils ein Richtkoppler nachgeschaltet ist, an dessen Nebenausgang der Eingang des zugehörigen Empfängers (13 oder 23) angeschlossen ist und an dessen Hauptausgang der ausgangsseitige Teil des zugehörigen Leitungszweiges (10 oder 20) angeschlossen ist.

11. Funkübertragungssystem nach einem der Ansprüche 7 bis 10, dadurch gekennzeichnet, daß die Teilabschnitte (2; 3) unverzweigt sind.

12. Funkübertragungssystem nach einem der Ansprüche 7 bis 10, dadurch gekennzeichnet, daß die Teilabschnitte (2; 3) verzweigt sind mit jeweils mindestens einem Verzweigungspunkt (6).

13. Funkübertragungssystem nach einem der Ansprüche 7 bis 10, dadurch gekennzeichnet, daß mehrere Teilabschnitte (2; 3) maschenförmig miteinander verbunden sind.

14. Funkübertragungssystem nach einem der Ansprüche 7 bis 13, dadurch gekennzeichnet, daß mehrere Teilabschnitte (2; 3) raumgitterförmig miteinander verbunden sind.

15. Funkübertragungssystem nach einem der Ansprüche 7 bis 14, dadurch gekennzeichnet, daß es in unterirdischen Anlagen eingesetzt wird.

16. Funkübertragungssystem nach Anspruch 15, dadurch gekennzeichnet, daß es in natürlich entstandenen Höhlen eingesetzt wird.

17. Funkübertragungssystem nach Anspruch 15, dadurch gekennzeichnet, daß es im Bergbau eingesetzt wird.

18. Funkübertragungssystem nach Anspruch 15, dadurch gekennzeichnet, daß es in unterirdischen Lagern eingesetzt wird.

19. Funkübertragungssystem nach Anspruch 15, dadurch gekennzeichnet, daß es in unterirdischen Kommandoständen eingesetzt wird.

20. Funkübertragungssystem nach Anspruch 15, dadurch gekennzeichnet, daß es in unterirdischen Luftschutzanlagen eingesetzt wird.

21. Funkübertragungssystem nach Anspruch 15, dadurch gekennzeichnet, daß es in der Kanalisation eingesetzt wird.

22. Funkübertragungssystem nach Anspruch 15, dadurch gekennzeichnet, daß es in Tunnels eingesetzt wird.

23. Funkübertragungssystem nach einem der Ansprüche 15 bis 22, dadurch gekennzeichnet, daß zur oberirdischen Funkübertragung an mindestens einer Stelle eine Außenantenne (3) über eine Verbindungsschaltung (1) an das unterirdische Funkübertragungssystem angeschlossen ist.

24. Funkübertragungssystem nach Anspruch 23, dadurch gekennzeichnet, daß zur Funkübertragung zwischen mindestens einem Funkteilnehmer (5) an der Erdoberfläche und mindestens einem Funkteilnehmer (4) in der unterirdischen Anlage das Funkübertragungssystem an den entsprechenden Standorten des mindestens einen oberirdischen Funkteilnehmers jeweils eine Außenantenne (3) aufweist.

25. Funkübertragungssystem nach Anspruch 23, dadurch gekennzeichnet, daß zur unterirdischen Funkübertragung zwischen mehreren Funkteilnehmern (5) an der Erdoberfläche das Funkübertragungssystem an den entsprechenden Standorten der Funkteilnehmer jeweils eine Außenantenne (3) aufweist.

26. Funkübertragungssystem nach Anspruch 23, dadurch gekennzeichnet, daß zur oberirdischen Funkübertragung zwischen mehreren unabhängigen unterirdischen Funkübertragungssystemen jedes dieser Funkübertragungssysteme an mindestens einer Stelle eine Außenantenne (3) aufweist.

27. Funkübertragungssystem nach einem der Ansprüche 15 bis 26, dadurch gekennzeichnet, daß das Funkübertragungssystem als Not- und/oder Rettungsfunksystem eingesetzt wird.

## Claims

1. Method for the secure transmission of radio signals of radio subscribers (4, 5), who cannot enter into radio contact directly, in both radio directions by means of radio transmission system,
   - which radio transmission system consists of at least two partial portions (2; 3), which permit a transmission portion by portion of the radio signals in forward direction or in reverse direction,
   - wherein at least one of the partial portions contains a radiating cable (2), which serves as transmitting and receiving aerial,
   - wherein each of these cables is connected at at least one of its ends by way of a respective connecting circuit (1) with another partial portion,
   - wherein each of these connecting circuits contains two amplifiers (16, 26), which are connected in opposite direction and which amplify the radio signals appropriately for equalisation of the longitudinal attenuation in the directly connected partial portions,
   - wherein the first amplifier (16) amplifies radio signals in forward direction and the second amplifier (26) amplifies radio signals in reverse direction,
   characterised thereby,
   - that the individual partial portions (2; 3) of the radio transmission system, although ready for reception, are however one electrically decoupled from the other in the rest state and/or during transmission intervals,
   - that after reception of a radio signal of the duration T on one of the partial portions (2; 3) that are one electrically decoupled from the other, a direction coupling process takes place, which emanates from this first partial portion and in which along all connecting chains, which start out from the first partial portion and are formed by partial portions that are one connected with the other and the longest member of which comprises N partial portions, the nth partial portion of each connecting chain is respectively coupled electrically for the duration T with the (n + 1)th partial portion of the same respective connecting chain in such a form that a transmission of radio signals takes place each time only from the nth partial portion of a connecting chain to the (n + 1)th partial portion of the same connecting chain and not in reverse, wherein the number n runs from 1, 2, 3 to a maximum of N-1, and
   - that after the time T, a decoupling process takes place, which emanates from the first partial portion and in which along all connecting chains, which start out from this first partial portion, in succession the nth partial portion of each connecting chain is respectively decoupled electrically from the (n + 1)th partial portion of the same connecting chain.

2. Method according to claim 1, characterised thereby, that the radio subscribers (4, 5) transmit and/or receive on the same frequency.

3. Method according to claim 1, characterised thereby, that the radio subscribers (4, 5) transmit and/or receive on different frequencies.

4. Method according to one of the claims 1 to 3, characterised thereby, that on renewed reception of radio signals on one of the partial portions (2; 3) that is already decoupled electrically, a new directional coupling process takes place starting out from this partial portion already during the decoupling process.

5. Method according to one of the claims 1 to 4, characterised thereby, that the coupling or decoupling of the individual partial portions (2; 3) is performed in the associated connecting circuits.

6. Method according to one of the claims 1 to 4, characterised thereby, that electrically coupled partial portions (2; 3) are after run-down of the time T decoupled electrically one from the other only after a preset further time 'T', which is so dimensioned that short transmission intervals of the transmitting radio subscriber can be bridged over without the decoupling process being set into motion.

7. Radio transmission system for the performance of the method according to one of the claims 1 to 6,
   - which radio transmission system consists of at least two partial portions (2; 3), which permit a transmission portion by portion of the radio signals in forward direction or in reverse direction,
   - wherein at least one of the partial portions contains a radiating cable (2), which serves as transmitting and receiving aerial,
   - wherein each of these cables is connected at at least one of its ends by way of a respective connecting circuit (1) with another partial portion,
   - wherein each of these connecting circuits contains two amplifiers (16, 26), which are connected in opposite direction and which amplify the radio signals appropriately for equalisation of the longitudinal attenuation in the directly connected partial portions,
   - wherein the first amplifier (16) amplifies radio signals in forward direction and the second amplifier (26) amplifies radio signals in reverse direction, characterised thereby, that each of the connecting circuits (1) contains two inputs/outputs (11, 21), two switches (12, 22) and two receivers (13, 23), wherein
   - the first input/output (11) is provided for the connection of the connecting circuit (1) to a first partial portion (2; 3) and the second input/output (21) is provided for the connection of the connecting circuit (1) to a second partial portion (2; 3),
   - the first switch (12) is connected by its one end to the first input/output (11) and connectable by its other end either by way of a first line branch (10) to the input of the first amplifier (16) or by way of a second line branch (20) to the output of the second amplifier (26) and the second switch (22) is connected by its one end to the second input/output (21) and connectable by its other end either by way of the second line branch (20) to the input of the second amplifier (26) or by way of the first line branch (10) to the output of the first amplifier (16),
   - the first receiver (13) is connected at the input by way of a spur (14) of the first line branch (10) to the output of the first amplifier (16) and at the output to the control channel (15) for the second switch (22) and the second receiver (23) is connected at the input by way of a spur (24) of the second line branch (20) to the output of the second amplifier (26) and at the output to the control channel (25) for the first switch (12),
   and that in each of these connecting circuits (1),
   - in the rest state and/or during transmission intervals, the first input/output (11) is connected by way of the first switch (12) disposed in rest position and the first line branch (10) with the input of the first amplifier (16) and the second input/output (21) is connected by way of the second switch (22) disposed in rest position and the second line branch (20) with the input of the second amplifier (26)
   - during the transmission of radio signals in forward direction, the first input/output (11) is connected by way of the first switch (12) and the first line branch (10) with the input of the first amplifier (16) and the second input/output (21) is connected by way of the second switch (22) and the first line branch (10) with the output of the first amplifier (16),

- during the transmission of radio signals in reverse direction, the second input/output (21) is connected by way of the second switch (22) and the second line branch (20) with the input of the second amplifer (26) and the first input/output (11) is connected by way of the first switch (12) and the second line branch (20) with the output of the second amplifier (26), and

- during a coupling process or during a decoupling process, that switch (22 or 12), which is connected behind the output of the respectively active amplifier (16 or 26), is switched over either from the rest position into the other possible position or conversely from the other possible position into the rest position by means of the associated receiver (13 or 23) ready for reception.

8. Radio transmission system according to claim 7, characterised thereby, that during a decoupling process, that switch (22 or 12), which is connected behind the output of the previous active amplifier (16 or 26), is switched over into the rest position with a delay by a time T', which is so dimensioned that short transmission intervals in the transmission of radio signals of a radio subscriber are bridged over.

9. Radio transmission system according to one of the claims 7 and 8, characterised thereby, that the amplifiers (16, 26) are regulated in their amplification by way of a regulation (17, 27).

10. Radio transmission system according to one of the claims 7 to 9, characterised thereby, that a respective directional coupler, to the auxiliary output of which the input of the associated receiver (13 or 23) is connected and to the main output of which the output part of the associated line branch (10 or 20) is connected, is connected behind the output of the amplifiers (16, 26).

11. Radio transmission system according to one of the claims 7 to 10, characterised thereby, that the partial portions (2; 3) are not branched.

12. Radio transmission system according to one of the claims 7 to 10, characterised thereby, that the partial portions (2; 3) are branched each with at least one respective branching point (6).

13. Radio transmission system according to one of the claims 7 to 10, characterised thereby, that several partial portions (2; 3) are one connected with the other in the form of a mesh.

14. Radio transmission system, according to one of the claims 7 to 13, characterised thereby, that several partial portions (2; 3) are one connected with the other in the form of a space lattice.

15. Radio transmission system according to one of the claims 7 to 14, characterised thereby, that it is deployed in underground installation.

16. Radio transmission system according to claim 15, characterised thereby, that it is deployed in caves that have arisen naturally.

17. Radio transmission system according to claim 15, characterised thereby, that it is deployed in mining.

18. Radio transmission system according to claim 15, characterised thereby, that it is deployed in underground stores.

19. Radio transmission system according to claim 15, characterised thereby, that it is deployed in underground command posts.

20. Radio transmission system according to claim 15, characterised thereby, that it is deployed in underground air raid protection installations.

21. Radio transmission system according to claim 15, characterised thereby, that it is deployed in the sewerage.

22. Radio transmission system according to claim 15, characterised thereby, that it is deployed in tunnels.

23. Radio transmission system according to one of the claims 15 to 22, characterised thereby, that for the radio transmission above ground, an external aerial (3) is connected at at least one place by way of a connecting circuit (1) to the underground radio transmission system.

24. Radio transmission system according to claim 23, characterised thereby, that for the radio transmission between at least one radio subscriber (5) at the surface of the earth and at least one radio subscriber (4) in the underground installation, the radio transmission system displays a respective external aerial (3) at the corresponding locations of the at least one radio subscriber above ground.

25. Radio transmission system according to claim 23, characterised thereby, that for the underground radio transmission between several radio subscribers (5) at the surface of the earth, the radio transmission system displays a respective external aerial (3) at the corresponding locations of the radio subscribers.

26. Radio transmission system according to claim 23, characterised thereby, that for the radio transmission above ground between several independent underground radio transmission systems, each of these radio transmission systems displays an external aerial (3) at at least one place.

27. Radio transmission system according to one of the claims 15 to 26, characterised thereby, that the radio transmission system is deployed as emergency and/or rescue radio system.

**Revendications**

1. Procédé pour la transmission sûre, dans les deux sens, au moyen d'un système de radiotransmission, de signaux radio d'abonnés ou correspondants (4, 5) qui ne peuvent pas entrer directement en contact radio, dans lequel,
   - le système de radiotransmission est composé d'au moins deux tronçons (2; 3) autorisant une transmission tronçon par tronçon des signaux radio dans le sens aller ou dans le sens retour,
   - au moins un des tronçons contient un câble rayonnant (2) qui sert d'antenne d'émission et de réception,
   - chacun de ces câbles est relié à au moins l'une de ses extrémités à un autre tronçon à travers un circuit de jonction (1),
   - chacun de ces circuits de jonction contient deux amplificateurs (16, 26) montés en opposition, qui amplifient les signaux radio dans la mesure nécessaire pour compenser l'affaiblissement longitudinal dans les tronçons raccordés directement,
   - le premier amplificateur (16) amplifie les signaux radio dans le sens aller et le second amplificateur (26) amplifie les signaux radio dans le sens retour, caractérisé en ce

   - que, à l'état de repos et/ou dans les pauses d'émission, les différents tronçons (2; 3) du système de radiotransmission sont prêts à recevoir, mais sont découplés électriquement l'un de l'autre,
   - que, après la réception d'un signal radio de la durée T sur l'un des tronçons (2; 3) découplés électriquement l'un de l'autre, un processus de couplage directif se déroule à partir de ce premier tronçon, processus dans lequel, le long de toutes les suites de liaisons partant du premier troncon, qui sont formées par les tronçons reliés entre eux et dont le membre le plus long comprend N tronçons, le n-ième tronçon précédent de chaque suite de liaisons est successivement couplé chaque fois électriquement au (n + 1)-ième tronçon suivant, pendant la durée T, de manière qu'une transmission de signaux radio s'effectue seulement du n-ième tronçon d'une suite de liaisons au (n + 1)-ième tronçon de la même suite et non pas en sens inverse, le nombre n correspondant, suivant la longueur de la suite, à 1, 2, 3 et au maximum à N-1, et
   - après le temps T, se déroule un processus de découplage partant du premier tronçon, dans lequel, le long de toutes les suites de liaisons partant du premier tronçon, le n-ième tronçon de chaque suite de liaisons est successivement découplé électriquement du (n + 1)-ième tronçon de la même suite.

2. Procédé selon la revendication 1, caractérisé en ce que les correspondants radio (4, 5) émettent et/ou reçoivent sur la même fréquence.

3. Procédé selon la revendication 1, caractérisé en ce que les correspondants radio (4, 5) émettent et/ou reçoivent sur des fréquences différentes.

4. Procédé selon une des revendications 1 à 3, caractérisé en ce que, alors qu'un processus de découplage est encore en cours, en cas de nouvelle réception de signaux radio sur l'un des tronçons (2; 3) déjà découplés électriquement, un nouveau processus de couplage directif se déroule à partir de ce tronçon.

5. Procédé selon une des revendications 1 à 4, caractérisé en ce que le couplage ou le découplage des différents tronçons (2; 3) s'effectue dans les circuits de jonction correspondants.

6. Procédé selon une des revendications 1 à 5, caractérisé en ce que, après expiration du temps T, les tronçons (2; 3) couplés électriquement sont seulement découplés électriquement l'un de l'autre après un temps T' supplémentaire qui est choisi de manière que de courtes pauses d'émission du correspondant émetteur puissent être couvertes sans que le processus de découplage soit déclenché.

7. Système de radiotransmission pour la mise en oeuvre du procédé selon une des revendications 1 à 6 et d'après lequel

- le système de radiotransmission qui est composé d'au moins deux tronçons (2; 3) autorisant une transmission tronçon par tronçon des signaux radio dans le sens aller ou dans le sens retour,
- au moins un des tronçons contient un câble rayonnant (2) qui sert d'antenne d'émission et de réception,
- chacun de ces câbles est relié à au moins l'une de ses extrémités à un autre tronçon à travers un circuit de jonction (1),
- chacun de ces circuits de jonction contient deux amplificateurs (16, 26) montés en opposition, qui amplifient les signaux radio dans la mesure nécessaire pour compenser l'affaiblissement longitudinal dans les tronçons raccordés directement,
- le premier amplificateur (16) amplifie les signaux radio dans le sens aller et le second amplificateur (26) amplifie les signaux radio dans le sens retour, caractérisé en ce que chaque circuit de jonction (1) contient deux entrées/sorties (11, 21), deux commutateurs (12, 22) et deux récepteurs (13, 23), dont
- la première entrée/sortie (11) est prévue pour le raccordement du circuit de jonction (1) à un premier troncon (2; 3) et la seconde entrée/sortie (21) est prévue pour le raccordement du circuit de jonction (1) à un deuxième troncon (2; 3),
- le premier commutateur (12) est connecté par une extrémité à la première entrée/sortie (11) et peut être connecté par son autre extrémité, soit à travers une première branche de ligne (10) à l'entrée du premier amplificateur (16), soit à travers une seconde branche de ligne (20) à la sortie du second amplificateur (26), tandis que le second commutateur (22) est connecté par une extrémité à la seconde entrée/sortie (21) et peut être connecté par son autre extrémité, soit à travers la seconde branche de ligne (20) à l'entrée du second amplificateur (26), soit à travers la première branche de ligne (10) à la sortie du premier amplificateur (16),
- le premier récepteur (13) est relié par son entrée à la sortie du premier amplificateur (16) à travers une dérivation (14) de la première branche de ligne (10) et par sa sortie au canal de commande (15) pour le second commutateur (22), tandis que le second récepteur (23) est relié par son entrée à la sortie du second amplificateur (26) à travers une dérivation (24) de la seconde branche de ligne (20) et par sa sortie au canal de commande (25) pour le premier commutateur (12),

  et que, dans chacun de ces circuits de jonction (1)

- à l'état de repos et/ou dans les pauses d'émission, la première entrée/sortie (11) est connectée par le premier commutateur (12), se trouvant en position de repos, et la première branche de ligne (10) à l'entrée du premier amplificateur (16), tandis que la seconde entrée/sortie (21) est reliée par le second commutateur (22), se trouvant en position de repos, et la seconde branche de ligne (20) à l'entrée du second amplificateur (26),
- lors de la transmission de signaux radio dans le sens aller, la première entrée/sortie (11) est connectée par le premier commutateur (12) et la première branche de ligne (10) à l'entrée du premier amplificateur (16) et la seconde entrée/sortie (21) est reliée par le second commutateur (22) et la première branche de ligne (10) à la sortie du premier amplificateur (16),
- lors de la transmission de signaux radio dans le sens retour, la seconde entrée/sortie (21) est connectée par le second commutateur (22) et la seconde branche de ligne (20) à l'entrée du second amplificateur (26) et la première entrée/sortie (11) est reliée par le premier commutateur (12) et la seconde branche de ligne (20) à la sortie du second amplificateur (26) et
- pendant un processus de couplage ou de découplage, le commutateur (22 ou 12) en aval de la sortie de l'amplificateur (16 ou 26) actif à ce moment, est commuté respectivement, au moyen du récepteur (13 ou 23) coordonné et qui est prêt à recevoir, de la position de repos à l'autre position possible ou, inversement, de l'autre position possible à la position de repos.

8. Système de radiotransmission selon la revendication 7, caractérisé en ce que, lors d'un processus de découplage, le commutateur (21 ou 12) monté en aval de la sortie de l'amplificateur (16 ou 26) précédemment actif, est commuté à la position de repos avec un retard T' qui est choisi de manière que de courtes pauses d'émission dans la transmission de signaux radio d'un correspondant radio soient couvertes.

9. Système de radiotransmission selon la revendication 7 ou 8, caractérisé en ce que le gain des amplificateurs (16, 26) est réglé au moyen d'une régulation (17, 27).

10. Système de radiotransmission selon une des revendications 7 à 9, caractérisé en ce que la sortie de chacun des amplificateurs (16, 26) est suivie d'un coupleur directif, à la sortie annexe duquel est raccordée l'entrée du récepteur (13 ou 23) correspondant et à la sortie principale duquel est raccordée la partie côté sortie de la branche de ligne (10 ou 20) correspondante.

11. Système de radiotransmission selon une des revendications 7 à 10, caractérisé en ce que les tronçons (2; 3) ne sont pas ramifiés.

12. Système de radiotransmission selon une des revendications 7 à 10, caractérisé en ce que les tronçons (2; 3) sont ramifiés en au moins un point de ramification (6).

13. Système de radiotransmission selon une des revendications 7 à 10, caractérisé en ce que plusieurs tronçons (2; 3) sont reliés entre eux en forme de mailles.

14. Système de radiotransmission selon une des revendications 7 à 13, caractérisé en ce que plusieurs tronçons (2; 3) sont reliés entre eux à la façon d'un réseau spatial.

15. Système de radiotransmission selon une des revendications 7 à 14, caractérisé en ce qu'il est appliqué dans des installations souterraines.

16. Système de radiotransmission selon la revendication 15, caractérisé en ce qu'il est appliqué dans des cavités formées naturellement.

17. Système de radiotransmission selon la revendication 15, caractérisé en ce qu'il est appliqué dans les mines.

18. Système de radiotransmission selon la revendication 15, caractérisé en ce qu'il est appliqué dans des magasins souterrains.

19. Système de radiotransmission selon la revendication 15, caractérisé en ce qu'il est appliqué dans des postes de commandement souterrains.

20. Système de radiotransmission selon la revendication 15, caractérisé en ce qu'il est appliqué dans des abris antiaériens souterrains.

21. Système de radiotransmission selon la revendication 15, caractérisé en ce qu'il est appliqué dans les égouts.

22. Système de radiotransmission selon la revendication 15, caractérisé en ce qu'il est appliqué dans des tunnels.

23. Système de radiotransmission selon une des revendications 15 à 22, caractérisé en ce que, en vue de la radiotransmission à la surface, une antenne extérieure (3) est raccordée à au moins un endroit, à travers un circuit de jonction (1), au système de radiotransmission souterrain.

24. Système de radiotransmission selon la revendication 23, caractérisé en ce que, pour la radiotransmission entre au moins un correspondant radio (5) à la surface de la terre et au moins un correspondant radio (4) dans l'installation souterraine, le système de radiotransmission présente une antenne extérieure (3) à chacun des emplacements d'un correspondant radio en surface ou de chacun des correspondants radio en surface.

25. Système de radiotransmission selon la revendication 23, caractérisé en ce que, pour la radiotransmission souterraine entre plusieurs correspondants radio (5) se trouvant à la surface de la terre, le système de radiotransmission présente une antenne extérieure (3) à chacun des emplacements des correspondants.

26. Système de radiotransmission selon la revendication 23, caractérisé en ce que, pour la radiotransmission en surface entre plusieurs systèmes de radiotransmission souterrains indépendants, chacun de ces systèmes de radiotransmission présente une antenne extérieure (3) à au moins un endroit.

27. Système de radiotransmission selon une des revendications 15 à 26, caractérisé en ce qu'il est utilisé en tant que système radioélectrique de secours et/ou de sauvetage.

FIG. 1

FIG. 2

FIG. 3

FIG. 4

FIG. 5

FIG. 6

FIG. 7

FIG. 8

Berg mit Tunnel

FIG. 9